# EUROPEAN PATENT APPLICATION

(11) **EP 0 861 587 A1**
(43) Date of publication of application: **02.09.1998**
(21) Application number: 98200573.8
(22) Date of filing: 24.02.1998
(51) Int. Cl.: A01G 1/00, E02D 29/02, E04B 1/10

(54) **Device for garden and ground lay-out**

(30) Priority: 26.02.1997 SE 9700672
(71) Applicant: Mossboda Trä Aktiebolag, 718 92 Frövi (SE)
(72) Inventor: Carlsson, Bengt, 718 92 Frövi (SE)
(74) Representative: Hynell, Magnus

(57) **Abstract**

The present invention relates to a wooden construction intended to be used for garden lay-out, ground lay-out/- work, staying and the like. The invention is characterised in that it comprises a number of elongated wooden elements (10, 12, 14), that the elements are joined together whereby a longitudinal space (16) is formed, and that said space is filled with a material (18) capable of increasing the stability and load carrying ability of the construction.

## Description

### TECHNICAL AREA

The present invention relates to a wooden construction intended to be used for garden planning, ground lay-out / work, staying and the like.

### BACKGROUND OF THE INVENTION

Railroad sleepers have been used for many years in garden lay-out as retaining walls for level differences, borders for flower beds and such, for ground work and staying such as ground support for building cranes, scaffolding and such. The advantage is that they are impregnated so that they can withstand outdoor climate for many years, that they have a strength and stability to withstand at least a certain ground pressure, especially if they are joined together, and that they have been inexpensive as they have been replaced successively by concrete-sleepers. Further, wooden sleepers have a characteristic appearance that many people like to have in their gardens, either for new ground constructions or replacing existing constructions. Sleepers may be used as ground support for building cranes, scaffoldings and the like and apart from the advantage resistance against rot, they are also stable and strong enough to carry relatively large loads.

However, railway sleepers have a few drawbacks. They have become more and more expensive as the number of wooden sleepers have decreased and the impregnation is environmentally hazardous. For some areas of use, they are also unnecessary heavy. There exist on the market new wooden sleepers and so called building timber, which are massive elongated wooden elements with planar upper ad undersides and somewhat rounded sides, but they are relatively expensive because massive wood is used and impregnation is required. Further, when the sleepers cannot be used any more, they are difficult and costly to recycle/despose of as seen from an environmental point of view.

### BRIEF DESCRIPTION OF THE INVENTION

The present invention aims at providing a wooden construction intended to be used for garden lay-out, ground and the like work that does not exhibit the drawbacks present for used railroad sleepers and newly produced massive sleepers and that are favourable to produce form a cost and environmental point of view.

This aim is achieved according to one aspect of the invention by a wooden construction intended to be used for garden lay-out, ground lay-out/ -work, staying and the like, characterised in that it comprises a number of elongated elements, that the elements are joined together, whereby a longitudinal space is formed, and that said space is filled with a material capable of increasing the stability and load-carrying ability of the construction.

According to another aspect of the invention, the material of which the space is filled with is of a lesser quality or another kind than the material of the elements.

The advantages with the device according to the invention are several. The device may be formed in many different ways depending on desire and function and will be cheaper to manufacture than if massive wood where to be used all through. Furthermore, the impregnation, if necessary, may be used only for the elements, which preferably are impregnated before the joining. The impregnation may either be done as conventional pressure impregnation or by the newly developed impregnation methods, such as heating the wood to 300-400°C, giving rise to a change in the cells of the wood which increases its resistance against moisture and rot. If the filling consists of chips or sawdust, these may come from the production of the elements.

From an environmental point of view there are further advantages. When the construction after a number of years needs to be replaced, the outer elements may easily be removed and sorted as wooden scrap and the core as combustion material.

With a construction according to the invention, a cost effective, weatherproof, stable, load resistant and aesthetic construction is obtained which may be used in the areas where sleepers and building timber are used.

These and other aspects and advantages with the present invention will become apparent from the detailed description of a conceivable embodiment and from the patent claims.

### SHORT DESCRIPTION OF DRAWINGS

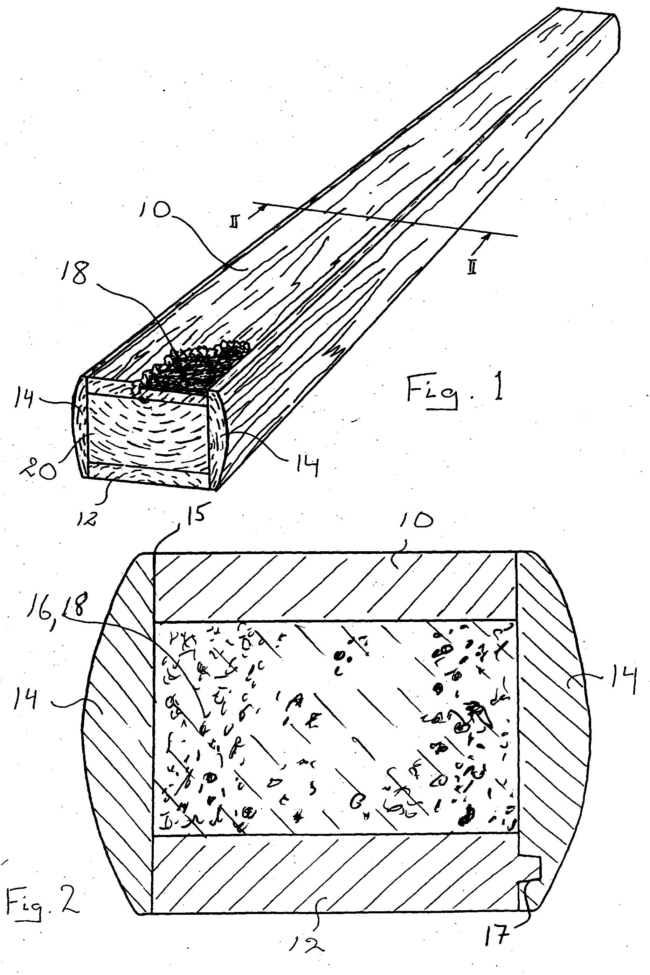

In the following description of a conceivable embodiment, reference will be made to the attached drawings, of which
- Fig. 1: is a view in perspective and partly broken of a wooden construction according to the invention, and
- Fig. 2: shows a cross section taken along the line II-II of Fig. 1.

### DETAILED DESCRIPTION OF EMBODIMENT

The construction shown in the figures comprises four elongated elements 10, 12, 14 of wood. These are joined together along their longsides, whereby a tube with an upper wall 10, a lower wall 12 and two side walls 14 with a rectangular cross-section is obtained and with a rectangular space 16. The upper and lower elements 10, 12 are preferably planar so that more constructions can be put on top of each other. The side elements 14 are arranged with a somewhat convex shape. The upper and lower elements are preferably wider than the side elements so that a construction with a greater width than height is obtained. The side elements are attached to the side edges of the upper and lower elements so that the joints 15 between the elements are arranged on the upper side and underside respectably of the construction, so that the construction, when viewed from the sides, gives the impression of a massive log.

The joining of the elements may be done in a suitable manner by for example nailing, screwing, gluing, etc. Further, the elements may, if desired, be provided with longitudinal tongues and grooves 17 that fit together when joining the elements, Fig. 2.

In order to obtain a certain weight and stability to the device, the space 16 is filled with a suitable material 18. The ends are then closed with for example pieces of wood 20.

Depending on demand, the elements may either be produced by impregnated wood or be produced by some sort of wood, which is resistant against rot, such as for example oak. The filling may for example consist of surplus material such as chips, sawdust or the like bound by suitable adhesive, or of some simpler and cheaper sort of wood such as for example spruce. If massive wood is used as filling, it is then better to start off with a wooden core and the join the elements to the core and to each other.

It is also conceivable that the space is filled with some sort of expanding plastic foam that after curing forms a stable, load-carrying core. For example, two-component polyurethane may be used, which may become very hard with suitable additives. In this case, it conceivable that the elements and one end piece are joined together, after which the plastic material is entered into the open end and expanded and cured so that the entire space is filled.

In the embodiment shown, the side elements are rounded so as to imitate building timber, but they may also be straight in order to imitate sleepers.

It is to be understood that the invention is not to be limited to the detailed description and the embodiment shown in the drawings, but may be modified within the scope of the patent claims.

## Claims

1. Wooden construction intended to be used for garden lay-out, ground lay-out/- work, staying and the like, **characterised** in that it comprises a number of elongated wooden elements (10, 12, 14), that the elements are joined together whereby a longitudinal space (16) is formed, and that said space is filled with a material (18) capable of increasing the stability and load carrying ability of the construction.

2. Wooden construction according to Claim 1, **characterised** in that it comprises four elements, upper and lower elements and side elements, joined together so that the construction is substantially rectangular as seen in a cross-section perpendicular to the longitudinal direction of the construction.

3. Wooden construction according to Claim 2, **characterised** in that the side elements are attached to the side edges of the upper and lower elements whereby the joints between the elements are arranged on the upper and undersides of the construction.

4. Wooden construction according to Claim 2, **characterised** in that the outer sides of the side elements are arranged with a somewhat convex shape.

5. Wooden construction according to Claim 2, **characterised** in that the upper and lower elements are wider than the side elements so that the construction obtains a greater width than height.

6. Wooden construction according to any of the preceding Claims, **characterised** in that the material which the space is filled with is of another kind than the material of the elements.

7. Wooden construction according to Claim 6, **characterised** in that the material in the space comprises massive wood of a kind which is cheaper than the wood of the elements.

8. Wooden construction according to Claim 6, **characterised** in that the material in the space comprises chips and sawdust bound by an adhesive.

9. Wooden construction according to Claim 6, **characterised** in that the material in the space comprises expanding plastic foam.

10. Wooden construction according to any of the preceding Claims, **characterised** in that the elements are impregnated.

11. Wooden construction according to any of the preceding Claims, **characterised** in that the elements are produced from a material resistant to rot.

12. Wooden construction according to any of the preceding Claims, **characterised** in that the ends are sealed with the same kind of material as the elements.
